# EUROPÄISCHE PATENTSCHRIFT

(11) **EP 0 628 785 B1**
(45) Veröffentlichungstag und Bekanntmachung des Hinweises auf die Patenterteilung: **22.07.1998**
(21) Anmeldenummer: 94108475.8
(22) Anmeldetag: 01.06.1994
(51) Int. Cl.: G01B 5/00, G01B 7/00

(54) **Mehrkoordinaten-Tastkopf**
Multi-coordinates feeler head
Tête de palpage de plusieurs coordonnées

(30) Priorität: 05.06.1993 DE 4318741
(43) Veröffentlichungstag der Anmeldung: 14.12.1994
(73) Patentinhaber: Dr. Johannes Heidenhain GmbH, D-83292 Traunreut (DE)
(72) Erfinder: Feichtinger, Kurt, D-83349 Palling (DE)

(56) Entgegenhaltungen:
- EP-A- 0 103 856
- EP-A- 0 344 871
- EP-A- 0 443 968
- DE-A- 2 207 270
- DE-A- 3 712 249
- DE-A- 3 725 205
- PATENT ABSTRACTS OF JAPAN vol. 9, no. 199 (P-380) (1922) 16. August 1985 & JP-A-60 064 206 (TOUKIYOU SEIMITSU KK.)

## Beschreibung

Es ist bereits eine Vielzahl von messenden und schaltenden Mehrkoordinaten-Tastköpfen bekannt, die zum Antasten von mehrdimensionalen Körpern dienen. Eingesetzt werden Mehrkoordinaten-Tastköpfe in letzter Zeit vor allem in Koordinatenmeßmaschinen und in Werkzeugmaschinen zum Digitalisieren von Oberflächenprofilen.

Aus der DE 22 42 355 C ist ein Tastkopf zum Antasten von mehrdimensionalen Gegenständen bekannt. Die bei der Abtastung verursachte dreidimensionale Bewegung des Taststiftes relativ zum Gehäuse des Tastkopfes wird mittels dreier Geradführungen in die drei Koordinatenachsen X, Y, Z zerlegt. Jede Geradführung einer Koordinatenachse X, Y, Z besteht aus einem Blattfeder-Parallelogramm. Die drei Blattfeder-Parallelogramme sind turmartig übereinander angeordnet, was einen kompakten Aufbau verhindert. Durch die turmartige lange Anordnung der Blattfeder-Parallelogramme wird der Tastkopf auch sehr labil und gegenüber äußeren Schwingungseinflüssen empfindlich.

Um eine kompaktere Bauform zu erreichen, wurde gemäß der DE 22 07 270 A auch bereits vorgeschlagen, zwei Blattfeder-Parallelogramme ineinanderzuschachteln, so daß die Blattfedern vier Seiten eines Würfels bilden. In der dritten Koordinatenachse ist der Taststift durch eine Längsführung in einer Hülse längsverschiebbar. Durch die Verwendung von drei Geradführungen wird auch dieser Tastkopf sehr labil.

Es gab nun verschiedene Versuche, einen kompakten Aufbau mit spielfreien und reibungsfreien Führungen zu realisieren. So weist der Tastkopf gemäß der DE 26 20 099 C2 drei ineinandergeschachtelte Blattfeder-Parallelogramme auf. Trotz der Verschachtelung sind die Blattfeder-Parallelogramme wirkungsmäßig hintereinander angeordnet, was ein relativ labiles und gegen Erschütterungen empfindliches Gebilde ergibt. Darüber hinaus verursacht eine Auslenkung eines Parallelogrammes auch zwangsläufig eine Auslenkung eines weiteren Parallelogrammes, was zu Fehlmessungen führen kann.

Um diese Fehlmessungen zu vermeiden, wurde in der EP 0 299 033 B1 die Verwendung von doppelten Blattfeder-Parallelogrammen vorgeschlagen. Durch diese Vielzahl von Blattfeder-Parallelogrammen wird der Tastkopf noch labiler und empfindlicher gegenüber Erschütterungen, weiterhin wird die Fertigung eines derartigen Tastkopfes schwierig.

Die Verwendung eines Kreuzfedergelenkes 7 bei ein-dimensionalen Tastköpfen ist aus der DE 34 15 419 Al bekannt, es wurden aber nicht die Vorteile bei der Verwendung in einem Mehrkoordinaten-Tastkopf mit Geradführungen erkannt. Bestätigt wird dies durch die DE 37 25 205 A1, in der ein Mehrkoordinaten-Tastkopf mit einem Kardangelenk sowie einer Geradführung, bestehend aus acht Blattfedern beschrieben ist. Die in der DE 37 25 205 A1 angegebene Möglichkeit, jede Blattfeder durch ein Kreuzfedergelenk zu ersetzen, führt zu einer Lösung, bei der für jede Achse eine Vielzahl von Kreuzfedergelenken erforderlich ist, um mittels Kreuzfedergelenken eine Geradführung zu realisieren. Ein derartiger Tastkopf ist wiederum sehr labil und ist aufwendig zu realisieren. Dies gilt auch für den in der EP 0 344 871 A1 beschriebenen Tastkopf.

Aufgabe der Erfindung ist es, einen Mehrkoordinaten-Tastkopf anzugeben, der einen einfachen Aufbau aufweist und der gegenüber äußeren Störeinflüssen unempfindlich ist. Desweiteren wird mit der Erfindung angestrebt, einen Tastkopf zu schaffen, der korrekte Meßsignale liefert.

Diese Aufgabe wird gemäß der Erfindung durch die Merkmale des Anspruches 1 gelöst.

Der erfindungsgemäße Tastkopf bietet die Gewähr dafür, daß für jede Koordinatenachse ein Meßsignal erzeugt wird, das zumindest annähernd der Auslenkung des Taststiftes in den einzelnen Koordinatenachsen proportional ist. Weiterhin ist die Empfindlichkeit gegenüber Erschütterungen verringert und die Steifigkeit des Tastkopfes bei guter Antastcharakteristik vergrößert.

Bevorzugte Einzelheiten des erfindungsgemäßen Mehrkoordinaten-Tastkopfes sind Gegenstand der abhängigen Ansprüche.

Anhand der Zeichnungen werden Ausführungsbeispiele näher erläutert.

Es zeigt
- Figur 1: einen Schnitt durch einen erfindungsgemäßen Tastkopf,
- Figur 2: ein Kreuzfedergelenk des Tastkopfes nach Figur 1,
- Figur 3: eine Auslenkung des Kreuzfedergelenkes nach Figur 1,
- Figur 4: die Anordnung der Meßsysteme im Tastkopf nach Figur 1,
- Figur 5: einen Längsschnitt durch einen weiteren erfindungsgemäßen Tastkopf und
- Figur 6: einen weiteren Längsschnitt VI-VI des Tastkopfes nach Figur 5.

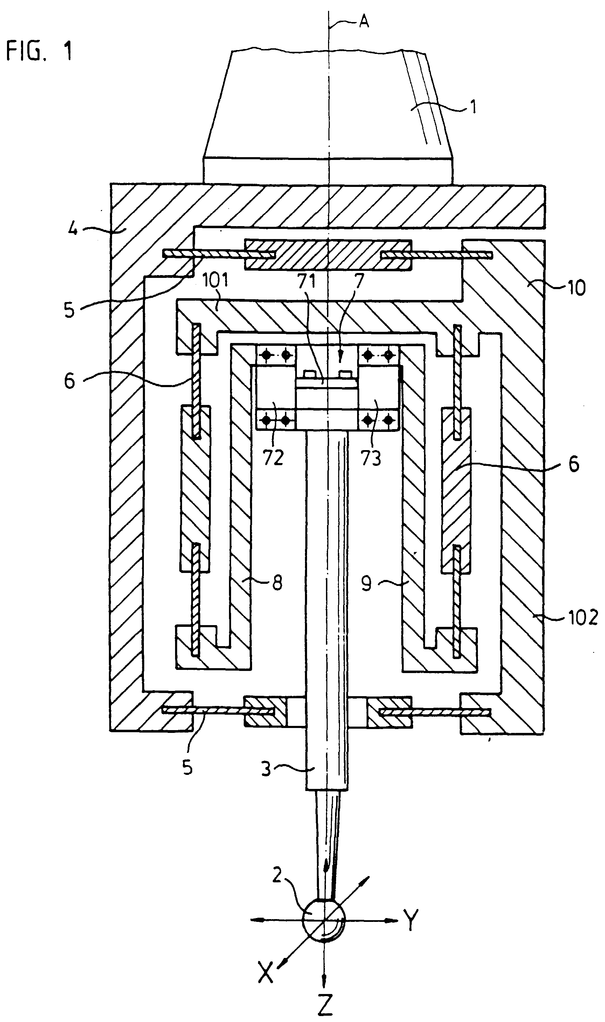

In Figur 1 ist ein Mehrkoordinaten-Tastkopf gemäß der Erfindung im Schnitt dargestellt. Der Tastkopf wird mit dem Einspannkegel 1 an einer Koordinatenmeßmaschine oder einer Werkzeugmaschine befestigt und relativ zu einem nicht gezeigten Werkstück bewegt. Dabei wird das Werkstück von einer Tastkugel 2 des Tastkopfes in bekannter Weise abgetastet. Bei dieser berührenden Abtastung führt ein Taststift 3, an dem die Tastkugel 2 befestigt ist, Bewegungen in den drei Koordinatenachsen X, Y, Z relativ zum Einspannkegel 1 aus.

Der Taststift 3 ist mittels einer Führungsanordnung auslenkbar über einen Halter 4 am Einspannkegel 1 befestigt. Diese Führungsanordnung besteht bei dem gezeigten Dreikoordinaten-Tastkopf aus einer Geradführung für Auslenkungen in Z-Richtung und einer weiteren Geradführung für Auslenkungen des Taststiftes 3 in Y-Richtung. Diese Geradführungen bestehen aus an sich bekannten Blattfeder-Parallelogrammen 5 und 6. Zur Auslenkung des Taststiftes 3 in X-Richtung ist ein Kreuzfedergelenk 7 vorgesehen.

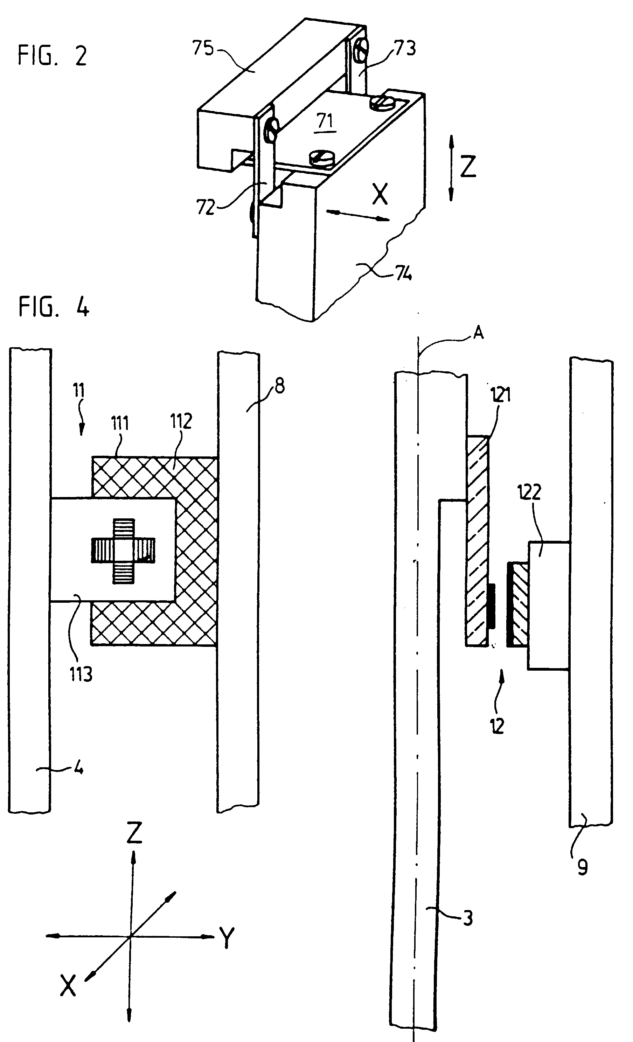

Dieses Kreuzfedergelenk 7 ist in Figur 2 im Detail dargestellt. Es besteht aus sich kreuzenden Blattfedern 71, 72, 73, wobei jeweils ein Ende der beiden äußeren Blattfedern 72, 73 über ein Verbindungsteil 74 mit einem Ende der weiteren mittleren Blattfeder 71 verbunden ist. Die gegenüberliegenden anderen Enden der Blattfedern 71, 72, 73 sind mit einem weiteren Verbindungsteil 75 verbunden. Es ist auch die Verwendung eines Kreuzfedergelenkes möglich, bei dem die Verbindungsteile geschliffene Paßringe sind. Ein derartiges Kreuzfedergelenk wird in der Literatur als Teldix-Kreuzfedergelenk bezeichnet (Max Pollermann: Bauelemente der Physikalischen Technik, Springer Verlag 1972, Seiten 80 bis 82). Der Vorteil eines Kreuzfedergelenkes 7 ist die spielfreie Lagerung und die kleine Bauform bei hoher Steifigkeit.

Beim vorteilhaften Aufbau nach Figur 1 ist der Taststift 3 am ersten Verbindungsteil 74 des Kreuzfedergelenkes 7 oder direkt an den Enden der Blattfedern 71, 72, 73 befestigt. Am weiteren Verbindungsteil 75 des Kreuzfedergelenkes 7 sind zwei Brücken 8 und 9 angeordnet, deren Längsachsen parallel zur Achse des Taststiftes 3 in Richtung der Tastkugel 2 verlaufen.

Am unteren Ende der starren Brücken 8 und 9 ist das Blattfeder-Parallelogramm 6 für die Y-Auslenkung des Taststiftes 3 befestigt. Die Blattfedern 6 dieses Parallelogrammes verlaufen parallel zur Achse des Taststiftes 3 in Richtung des Einspannkegels 1. Die anderen Enden des Blattfeder-Parallelogrammes 6 sind an einem Schenkel 101 eines winkelförmigen starren Zwischenteiles 10 befestigt. Dieser Schenkel 101 verläuft in Y-Richtung quer zur Achse des Taststiftes 3. An dem anderen, rechtwinkelig dazu verlaufenden Schenkel 102 des Zwischenteiles 10 ist das Blattfeder-Parallelogramm 5 für die Z-Achse befestigt. Die Blattfedern 5 dieses Parallelogrammes verlaufen in Y-Richtung und sind in Z-Richtung voneinander beabstandet angeordnet, so daß sie den Raum mit dem Kreuzfedergelenk 7 und dem Blattfeder-Parallelogramm 6 einschließen. Die anderen Enden der Blattfedern 5 des Parallelogrammes für die Z-Achse sind an dem starren Halter 4 befestigt. Hierzu ist der Halter 4 L-förmig ausgebildet, wobei an einem Schenkel die Blattfedern 5 und am anderen, rechtwinkelig dazu verlaufenden Schenkel der Einspannkegel 1 montiert sind.

Der Aufbau des Kreuzfedergelenkes 7 wurde bereits erläutert. Wie nachfolgend ausgeführt wird, ist es besonders vorteilhaft, wenn das Verbindungsteil 74 mit dem Taststift 3 an dem unteren, zur Tastkugel 2 weisenden Ende der Blattfedern 72, 73 befestigt ist. Dabei verläuft die Längsachse der Blattfedern 72, 73 in Z-Richtung parallel zur Achse des Taststiftes 3 und sie sind senkrecht dazu in X-Richtung auslenkbar.

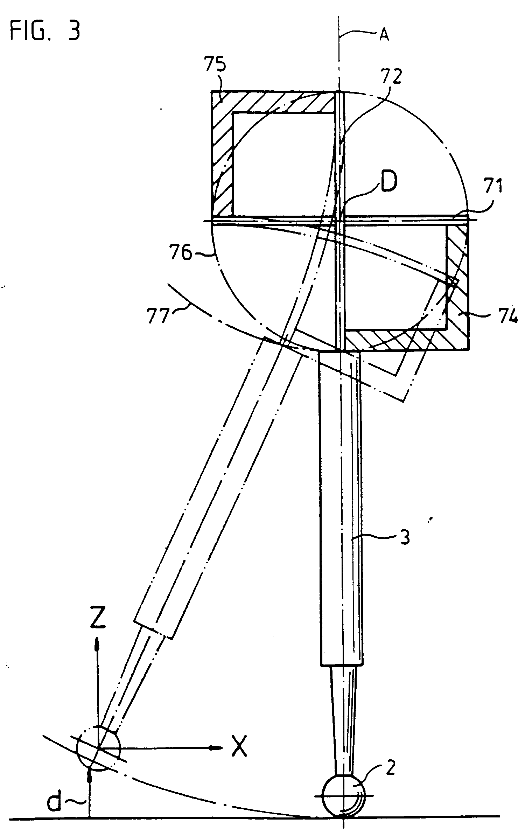

Eine Auslenkung des Taststiftes 3 in X-Richtung verursacht eine Schwenkbewegung des Kreuzfedergelenkes 7. Bei äußerst kleinen Auslenkungen liegt die Drehachse D in der Schnittgeraden der Ebenen der Blattfedern 71, 72, 73. Diese Bewegungsbahn 76 des Befestigungspunktes zwischen dem Kreuzfedergelenk 7 und dem Taststift 3 ist in Figur 3 eingezeichnet. Bei in der Praxis auftretenden Auslenkungen bewegt sich der Befestigungspunkt aber auf der Bahn 77. Dies hat den Vorteil, daß sich die Tastkugel 2 bei einer X-Auslenkung nur um einen kleinen Betrag d in Z-Richtung bewegt.

Eine Auslenkung des Taststiftes 3 in Y-Richtung wird über das Kreuzfedergelenk 7 und die starren Brücken 8, 9 auf das Blattfeder-Parallelogramm 6 übertragen. Dabei bewegt sich das Kreuzfedergelenk 7 mit den Brücken 8, 9 und die unteren Enden der Blattfedern 6 in Y-Richtung. Das Zwischenteil 10 führt dagegen keine Bewegung aus.

Eine Auslenkung des Taststiftes 3 in Z-Richtung wird über das Kreuzfedergelenk 7 und das Blattfeder-Parallelogramm 6 auf das Blattfeder-Parallelogramm 5 übertragen. Dabei bewegen sich das Kreuzfedergelenk 7 und das Blattfeder-Parallelogramm 6 ohne eine Auslenkung in Z-Richtung.

Durch das Kreuzfedergelenk 7 erhält der Tastkopf eine besonders hohe Steifigkeit bei ausreichender Empfindlichkeit bei der Antastung.

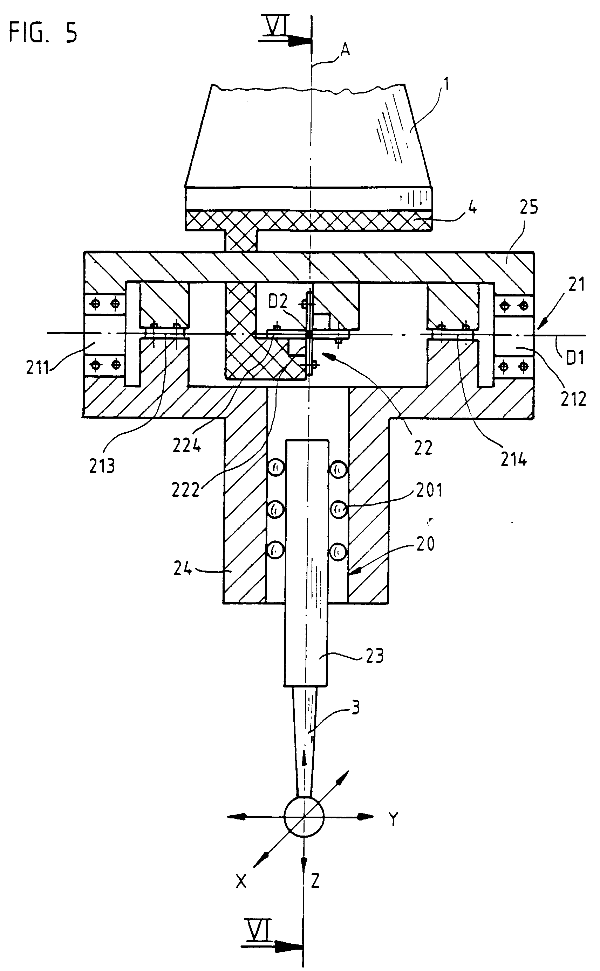

Bei dem beschriebenen Aufbau können die zur Erfassung der Auslenkungen notwendigen Meßsysteme 11, 12 besonders vorteilhaft angeordnet werden. Diese Anordnung der Meßsysteme 11, 12 ist in Figur 4 schematisch dargestellt. Die Auslenkungen des Taststiftes 3 entlang der Y- und Z-Achsen werden von einem lichtelektrischen Kreuzgitter-Meßsystem 11 gemessen. Dieses inkrementale Kreuzgitter-Meßsystem 11 ist in der DE 40 41 584 Al beschrieben. Der Maßstab 111 mit dem Kreuzgitter 112 ist relativ zur Abtasteinheit 113 in Y- und Z-Richtung verschiebbar. Hierzu ist der Maßstab 111 an der Brücke 8 des Tastkopfes und die Abtasteinheit 113 an dem Halter 4 befestigt. Es ist auch möglich, die Abtasteinheit 113 an der Brücke 8 und den Maßstab 111 an dem Halter 4 zu montieren.

Die Schwenkbewegungen des Taststiftes 3 entlang der X-Achse werden von einem inkrementalen Winkelmeßsystem 12 gemessen. Das lichtelektrische Winkelmeßsystem 12 besteht aus einem Maßstab 121 und einer Abtasteinheit 122. Der Maßstab 121 ist am Taststift 3 und die Abtasteinheit 122 an der Brücke 9 befestigt. Es ist auch möglich, die Abtasteinheit 122 am Taststift 3 und den Maßstab 121 an der Brücke 9 zu montieren. Die Teilung des Maßstabes 121 ist ein Sektor einer Teilscheibe, deren Teilstriche radial zum Schwenkpunkt des Kreuzfedergelenkes 7 verlaufen.

Anstelle des Winkelmeßsystemes 12 kann auch hier ein Kreuzgittermeßsystem eingesetzt werden.

Weiterhin kann auch für die X- und Z-Achse jeweils ein separates Längenmeßsystem verwendet werden. Weiterhin ist der Einsatz anderer Meßsysteme denkbar, beispielsweise indutiver, kapazitiver oder magnetischer Art.

Die Erfindung ist besonders vorteilhaft bei dem beschriebenen Dreikoordinaten-Tastkopf einsetzbar. Sie kann aber auch bei einem Zweikoordinaten-Tastkopf realisiert werden, indem neben dem Kreuzfedergelenk 7 nur ein Blattfeder-Parallelogramm 5 oder 6 verwendet wird. Weiterhin ist auch eine andere Lage der Führungen 5, 6, 7 im Raum möglich. So kann beispielsweise auch das Kreuzfedergelenk 7 für die Y- oder Z-Achse eingesetzt werden. Es liegt auch im Rahmen der Erfindung, wenn für eine Achse ein Blattfeder-Parallelogramm und für die beiden weiteren Achsen jeweils ein Kreuzfedergelenk eingesetzt wird.

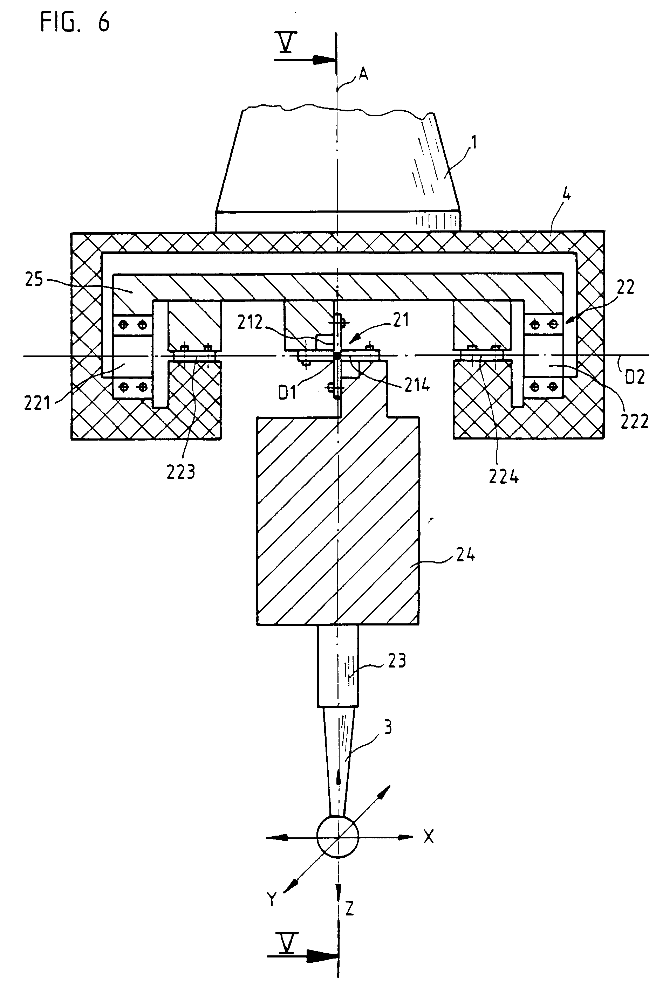

In den Figuren 5 und 6 ist ein weiteres Beispiel der Erfindung dargestellt. Figur 5 zeigt den Tastkopf entlang der Schnittlinie V-V und Figur 6 entlang der Schnittlinie VI-VI. Wie beim ersten Ausführungsbeispiel, so ist auch hier der Taststift 3 mittels einer Führungsanordnung am Halter 4 in drei Koordinatenrichtungen X, Y, Z auslenkbar befestigt. Diese Führungsanordnung besteht bei diesem Dreikoordinaten-Tastkopf aus einer Geradführung in Form einer Rollenführung 20 für Auslenkungen des Taststiftes 3 in Z-Richtung. Zur Auslenkung des Taststiftes 3 in X- und Y-Richtung ist jeweils ein Kreuzfedergelenk 21 und 22 vorgesehen.

Aus dem in Figur 5 gezeigten Längsschnitt des Tastkopfes ist die Rollenführung 20 im Detail ersichtlich. Der Taststift 3 selbst oder ein Träger 23 des Taststiftes 3 ist mittels Rollen 201 im Gestell 24 linear reibungs- und spielarm in Z-Richtung gelagert. Diese Geradführung kann aber auch eine Gleitführung sein.

Das Gestell 24 ist über eine erstes Kreuzfedergelenk 21 in X-Richtung verschwenkbar gelagert. Dieses Kreuzfedergelenk 21 besteht aus vier Blattfedern 211, 212, 213, 214, von denen jeweils zwei zueinander gekreuzt und in Bezug auf die Tasterachse A symmetrisch angeordnet sind. Das Kreuzfedergelenk 21 besitzt eine einzige Drehachse D1, um die der Taststift 3 in X-Richtung auslenkbar ist. Die äußeren Blattfedern 211, 212 liegen in einer Ebene, die durch die Y- und Z-Achse aufgespannt wird und sind zur Tasterachse A symmetrisch angeordnet. Jeweils in Richtung der Tasterachse A versetzt sind die beiden weiteren Blattfedern 213 und 214 symmetrisch zur Tasterachse A angeordnet, sie liegen in einer Ebene, welche durch die beiden Achsen X und Y aufgespannt wird.

Die unteren Enden der äußeren Blattfedern 211, 212 sind am Gestell 24 befestigt, ebenso die einen Enden der inneren Blattfedern 213, 214. Die oberen Enden der äußeren Blattfedern 211, 212, sowie die weiteren Enden der inneren Blattfedern 213, 214 sind an einer Brücke 25 befestigt. Vergleicht man das Kreuzfedergelenk 21 mit dem in Figur 2 räumlich dargestellten Kreuzfedergelenk, so entsprechen die äußeren Blattfedern 211, 212 den Blattfedern 72 und 73, sowie die beiden inneren Blattfedern 213, 214 der Blattfeder 71. Das Gestell 24 entspricht somit dem ersten Verbindungsteil 74 und die Brücke 25 dem zweiten Verbindungsteil 75.

Auslenkungen des Taststiftes 3 in Y-Richtung werden über die spielfreie Rollenführung 20 auf das Gestell 24 und weiter über das Kreuzfedergelenk 21 auf die Brücke 25 übertragen. Um eine Auslenkung der Brücke 25 relativ zum stationären Halter 4 in Y-Richtung zu ermöglichen, ist zwischen dem Halter 4 und der Brücke 25 das zweite Kreuzfedergelenk 22 angeordnet. Dieses Kreuzfedergelenk 22 entspricht im Aufbau dem ersten Kreuzfedergelenk 21 und besteht ebenfalls aus vier Blattfedern 221 bis 224. Die Drehachse D2 des Kreuzfedergelenkes 22 schneidet die Drehachse D1 des ersten Kreuzfedergelenkes 21 in einem gemeinsamen Punkt in der Tasterachse A.

Um für die X-Achse und die Y-Achse gleiche Antastbedingungen zu erreichen, sind die äußeren beiden Blattfedern 221 und 222, sowie die äußeren beiden Blattfedern 211 und 212 jeweils im gleichen Abstand zur Tasterachse A angeordnet. Ebenso sind die Abstände der beiden inneren Blattfedern 213, 214 zur Tasterachse A identisch mit den Abständen der beiden inneren Blattfedern 223 und 224.

Die oberen Enden der beiden äußeren Blattfedern 221, 222, sowie die einen Enden der beiden inneren Blattfedern 223, 224 sind jeweils an der Brücke 25 befestigt. Die unteren Enden der beiden äußeren Blattfedern 221, 222, sowie die weiteren Enden der beiden inneren Blattfedern 223, 224 sind jeweils am Halter 4 befestigt.

Die äußeren Blattfedern 221 und 222 liegen in einer Ebene, die durch die X- und Z-Achse aufgespannt wird. Die inneren Blattfedern 223 und 224 liegen in einer Ebene, die durch die X- und Y-Achse aufgespannt wird.

Zur Erfassung der Auslenkungen des Taststiftes 3 sind im Tastkopf beispielsweise inkrementale Meßsysteme enthalten. Für die Z-Achse kann in nicht gezeigter Weise ein Linearmeßsystem verwendet werden, bei dem der Maßstab am Träger 23 und der Abtastkopf am Gestell 24 befestigt sind. Für die X-Achse wird vorzugsweise ein Winkelmeßsystem eingesetzt, bei dem die Winkelteilung am Gestell 24 und der Abtastkopf an der Brücke 25 befestigt sind. Für die Y-Achse kann ebenfalls ein Winkelmeßsystem eingesetzt werden, wobei die Winkelteilung an der Brücke 25 und der Abtastkopf am Halter 4 befestigt sind. Es liegt aber auch im Rahmen der Erfindung für alle Achsen X, Y und Z Linearmeßsysteme oder auch Kreuzgittermeßsysteme einzusetzen.

## Patentansprüche

1. Mehrkoordinaten-Tastkopf mit einem in mehreren Koordinatenachsen (X, Y, Z) relativ zu einem Halter (4) auslenkbaren Taststift (3), wobei zumindest für die Auslenkung in einer ersten Koordinatenachse (Y, Z; Z) eine Geradführung (5, 6; 20) vorgesehen ist, dadurch gekennzeichnet, daß zur Auslenkung in einer zweiten senkrecht zur ersten verlaufenden Koordinatenachse (X; X, Y) ein Kreuzfedergelenk (7; 21, 22) vorgesehen ist und der Taststift (3) bei einer Auslenkung in dieser zweiten Koordinatenachse (X; X, Y) um die Drehachse (D1, D2) des Kreuzfedergelenkes (7; 21, 22) verschwenkt wird, indem eine lineare Antastbewegung in der zweiten Koordinatenachse (X; X, Y) in eine Schwenkbewegung des Taststiftes (3) umgewandelt wird, und daß die Geradführung ein Blattfeder-Parallelogramm (5, 6) oder eine Rollen- oder Gleitführung (20) ist.

2. Mehrkoordinaten-Tastkopf nach Anspruch 1, dadurch gekennzeichnet, daß der Taststift (3) an den Blattfedern (71, 72, 73) des Kreuzfedergelenkes (7) befestigt ist, und daß die Verbindung zwischen dem Kreuzfedergelenk (7) und dem Halter (4) zumindest ein Blattfeder-Parallelogramm (5) aufweist, das am Halter (4) befestigt ist.

3. Mehrkoordinaten-Tastkopf nach Anspruch 2, dadurch gekennzeichnet, daß an den einen Enden der Blattfedern (71, 72, 73) des Kreuzfedergelenkes (7) der Taststift (3) befestigt ist, wodurch eine Auslenkung des Taststiftes (3) in der zweiten Koordinatenachse (X) möglich ist, daß weiterhin an den anderen Enden der Blattfedern (71, 72, 73) des Kreuzfedergelenkes (7) senkrecht zur zweiten Koordinatenachse (X) und parallel zur Achse (A) des Taststiftes (3) verlaufende Brücken (8, 9) befestigt sind, an denen die einen Enden des ersten Blattfeder-Parallelogrammes (6) zur Auslenkung des Taststiftes (3) in der ersten Koordinatenachse (Y) montiert sind, wobei die Blattfedern (6) dieses Parallelogrammes parallel zur Achse (A) des Taststiftes (3) verlaufen, daß weiterhin die anderen Enden des ersten Blattfeder-Parallelogrammes (6) an einem Zwischenteil (10) angebracht sind, an dem wiederum die ersten Enden eines weiteren Blattfeder-Parallelogrammes (5) befestigt sind, und daß die Blattfedern (5) dieses Parallelogrammes senkrecht zur Achse (A) des Taststiftes (3) und senkrecht zur Längsachse des ersten Blattfeder-Parallelogrammes (6) verlaufen, und daß weiterhin die anderen Enden des weiteren Blattfeder-Parallelogrammes (5) am Halter (4) befestigt sind.

4. Mehrkoordinaten-Tastkopf nach Anspruch 3, dadurch gekennzeichnet, daß die Blattfedern (6) des ersten Parallelogrammes symmetrisch zur Achse des Taststiftes (3) angeordnet sind und zwei Seiten eines Raumes einschließen, in dem das Kreuzfedergelenk (7) angeordnet ist, daß weiterhin die Blattfedern (5) des weiteren Parallelogrammes zwei Seiten eines Raumes begrenzen, in dem sich das Kreuzfedergelenk (7) und das erste Blattfeder-Parallelogramm (6) befinden.

5. Mehrkoordinaten-Tastkopf nach Anspruch 1, dadurch gekennzeichnet, daß zur Auslenkung des Taststiftes (3) in einer dritten Koordinatenachse (Y), welche zu der ersten und zweiten Koordinatenachse (Z, X) senkrecht verläuft, ein weiteres Kreuzfedergelenk (22) vorgesehen ist und der Taststift (3) bei einer Auslenkung in dieser dritten Koordinatenachse (Y) um die Drehachse (D2) des Kreuzfedergelenkes (22) verschwenkt wird, indem eine lineare Antastbewegung in der dritten Koordinatenachse (Y) in eine Schwenkbewegung des Taststiftes (3) umgewandelt wird.

6. Mehrkoordinaten-Tastkopf nach Anspruch 1, dadurch gekennzeichnet, daß der Taststift (3) in einem Träger (23) über eine Rollenführung (20) in der ersten Koordinatenachse (Z) linear verschiebbar gelagert ist, daß der Träger (23) über ein Kreuzfedergelenk (21) um eine erste Drehachse (D1) in der zweiten Koordinatenachse (X) auslenkbar ist, daß der Träger (23) über das Kreuzfedergelenk (21) an einer Brücke (25) befestigt ist, und diese Brücke (25) über ein weiters Kreuzfedergelenk (22) am Halter (4) angebracht ist, wobei die Brücke (25) über dieses weitere Kreuzfedergelenk (22) um eine weitere Drehachse (D2) in einer dritten Koordinatenachse (Y) auslenkbar ist.

7. Mehrkoordinaten-Tastkopf nach Anspruch 6, dadurch gekennzeichnet, daß sich die beiden Drehachsen (D1, D2) in einem gemeinsamen Punkt schneiden.

8. Mehrkoordinaten-Tastkopf nach Anspruch 7, dadurch gekennzeichnet, daß der Schnittpunkt der beiden Drehachsen (D1, D2) auf der Achse (A) des Taststiftes (3) liegt.

9. Mehrkoordinaten-Tastkopf nach Anspruch 1, dadurch gekennzeichnet, daß zur Erfassung der Auslenkung des Taststiftes (3) in zumindest einer Achse (X), in der ein Kreuzfedergelenk (7) auslenkbar ist, ein Winkelmeßsystem (12) vorgesehen ist.

## Claims

1. Multi-coordinate feeler head with a feeler pin (3) deflectable in a plurality of co-ordinate axes (X,Y,Z) relative to a holder (4), a rectilinear guide means (5,6;20) being provided in a first co-ordinate axis (Y,Z;Z) at least for the deflection, characterised in that, for deflection in a second co-ordinate axis (X;X,Y) extending vertically to the first, a flexural pivot (7;21,22) is provided and the feeler pin (3), upon a deflection in this co-ordinate axis (X;X,Y) is pivoted about the axis of rotation (D1,D2) of the flexural pivot (7;21,22) while a linear scanning movement in the second co-ordinate axis (X;X,Y) is converted into a pivoting movement of the feeler pin (3), and in that the rectilinear guide means is a leaf spring parallelogram (5,6) or a roller or sliding guide (20).

2. Multi-coordinate feeler head according to claim 1, characterised in that the feeler pin (3) is secured to the leaf springs (71,72,73) of the flexural pivot (7), and in that the connection between the flexural pivot (7) and the holder (4) has at least one leaf spring parallelogram (5) which is secured to the holder (4).

3. Multi-coordinate feeler head according to claim 2, characterised in that the feeler pin (3) is attached to one set of ends of the leaf springs (71,72,73) of the flexural pivot (7), so that a deflection of the feeler pin (3) is possible in the second co-ordinate axis (X), further in that there are attached to the other ends of the leaf springs (71,72,73) of the flexural pivot (7) bridges (8,9) extending vertically to the second co-ordinate axis (X) and parallel to the axis (A) of the feeler pin (3), on which the one set of ends of the first leaf spring parallelogram (6) are mounted for deflection of the feeler pin (3) in the first co-ordinate axis (Y), the leaf springs (6) of this parallelogram extending parallel to the axis (A) of the feeler pin (3), further in that the other ends of the first leaf spring parallelogram (6) are attached to an intermediate part (10), on which in turn the first ends of a further leaf spring parallelogram (5) are attached, and in that the leaf springs (5) of this parallelogram extend vertically to the axis (A) of the feeler pin and vertically to the longitudinal axis of the first leaf spring parallelogram (6), and further in that the other ends of the further leaf spring parallelogram (5) are attached to the holder (4).

4. Multi-coordinate feeler head according to claim 3, characterised in that the leaf springs (6) of the first parallelogram are disposed symmetrically with the axis of the feeler pin (3) and enclose two sides of a space in which the flexural pivot (7) is disposed, further in that the leaf springs (5) of the further parallelogram define two sides of a space in which the flexural pivot (7) and the first leaf spring parallelogram (6) are located.

5. Multi-coordinate feeler head according to claim 1, characterised in that, in order to deflect the feeler pin (3) in a third coordinate axis (Y) which extends vertically to the first and second coordinate axis (Z,X), a further flexural pivot (22) is provided, and the feeler pin (3), upon a deflection in this third coordinate axis (Y) is pivoted about the axis of rotation (D2) of the flexural pivot (22), a linear scanning movement in the third coordinate axis (Y) being converted into a pivoting movement of the feeler pin (3).

6. Multi-coordinate feeler head according to claim 1, characterised in that the feeler pin (3) is linearly displaceably mounted in a carrier (23) via a roller guide means (20) in the first coordinate axis (Z), in that the carrier (23) is deflectable via a flexural pivot (21) about a first axis of rotation (D1) in the second coordinate axis (X), in that the carrier (23) is attached on a bridge (25) via the flexural pivot (21), and this bridge (25) is attached to the holder (4) via a further flexural pivot (22), the bridge (25) being deflectable via this further flexural pivot (22) about a further axis of rotation (D2) in a third coordinate axis (Y).

7. Multi-coordinate feeler head according to claim 6, characterised in that the two axes of rotation (D1,D2) intersect at a common point.

8. Multi-coordinate feeler head according to claim 7, characterised in that the point of intersection of the two axes of rotation (D1,D2) lies on the axis (A) of the feeler pin (3).

9. Multi-coordinate feeler head according to claim 1, characterised in that, in order to detect the deflection of the feeler pin (3) in at least one axis (X), in which a flexural pivot (7) is deflectable, an angle-measuring system (12) is provided.

## Revendications

1. Tête de palpage multi-axes comportant une touche (3) susceptible d'être déviée par rapport à un support (4) suivant plusieurs axes (X, Y, Z), un moyen de guidage droit (5, 6; 20) étant prévu au moins pour la déviation suivant un premier axe (Y, Z; Z), caractérisée par le fait qu'une articulation à ressorts croisés (7; 21, 22) est prévue pour la déviation suivant un deuxième axe (X; X, Y) perpendiculaire au premier et que la touche (3), lors d'une déviation suivant ce deuxième axe (X; X, Y) pivote autour de l'axe de rotation (D1, D2) de l'articulation à ressorts croisés (7; 21, 22 en transformant un mouvement de palpage linéaire suivant le deuxième axe (X; X, Y) en un mouvement de pivotement de la touche (3) et par le fait que le moyen de guidage droit est un parallélogramme à lames-ressorts (5, 6) ou un moyen de guidage à rouleaux ou à glissières (20).

2. Tête de palpage multi-axes selon la revendication 1, caractérisée par le fait que la touche (3) est fixée aux lames-ressorts (71, 72, 73) de l'articulation à ressorts croisés (7) et par le fait que la liaison entre l'articulation à ressorts croisés (7) et le support (4) comprend au moins un parallélogramme à lames-ressorts (5) qui est fixé au support (4).

3. Tête de palpage multi-axes selon la revendication 2, caractérisée par le fait que la touche (3) est fixée à l'une des extrémités des lames-ressorts (71, 72, 73) de l'articulation à ressorts croisés (7), permettant ainsi une déviation de la touche (3) suivant le deuxième axe (X), par le fait qu'en outre des pontets (8, 9) qui s'étendent perpendiculairement au deuxième axe (X) et parallèlement à l'axe (A) de la touche (3) et sur lesquels sont montées des extrémités du premier parallélogramme à lames-ressorts (6) pour la déviation suivant le premier axe (Y), sont fixés aux autres extrémités des lames-ressorts (71, 72, 73) de l'articulation à ressorts croisés (7), les lames-ressorts (6) de ce parallélogramme s'étendant parallèlement à l'axe (A) de la touche (3), par le fait qu'en outre les autres extrémités du premier parallélogramme à lames-ressorts (6) sont montées sur une pièce intermédiaire (10) à laquelle sont à leur tour fixées les premières extrémités d'un parallélogramme à lames-ressorts (5)supplémentaire et que les lames-ressorts (5) de ce parallélogramme s'étendent perpendiculairement à l'axe (A) de la touche (3) et perpendiculairement à l'axe longitudinale du premier parallélogramme (6) et par le fait que les autres extrémités du parallélogramme à lames-ressorts (5)supplémentaire sont fixées au support (4).

4. Tête de palpage multi-axes selon la revendication 3, caractérisée par le fait que les lames-ressorts (6) du premier parallélogramme sont disposées symétriquement par rapport à l'axe de la touche (3) et définissent deux côtés d'une chambre dans laquelle l'articulation à ressorts croisés (7) est disposée, par le fait qu'en outre les lames-ressorts (5) du parallélogramme supplémentaire délimitent deux côtés d'une chambre dans laquelle l'articulation à ressorts croisés (7) et le premier parallèlogramme à lames-ressorts (6) sont disposés.

5. Tête de palpage multi-axes selon la revendication 1, caractérisée par le fait qu'il est prévu une articulation à ressorts croisés (22) supplémentaire pour la déviation de la touche (3) suivant un troisième axe (Y) qui est perpendiculaire aux premier et deuxième axes (Z, X) et que la touche (3) lors d'une déviation suivant ce troisième axe (Y) pivote autour de l'axe de rotation (D2) de l'articulation à ressorts croisés (22) en transformant un mouvement de palpage linéaire suivant le troisième axe (Y) en un mouvement de pivotement de la touche (3).

6. Tête de palpage multi-axes selon la revendication 1, caractérisée par le fait que la touche (3) est montée dans un support (23) avec possibilité de coulissement linéaire suivant le premier axe (Z) grâce à une glissière à galets (20), par le fait que le support (23) est susceptible d'être dévié suivant le deuxième axe (X) autour d'un premier axe de rotation (D1) grâce à une articulation à lames-ressorts (21), par le fait que le support (23) est fixé à un pontet (25) par l'intermédiaire de l'articulation à lames-ressorts (21) et que ledit pontet (25) est monté sur le support (4) par l'intermédiaire d'une articulation à lames-ressorts (22) supplémentaire, le pontet (25) étant susceptible d'être dévié autour d'une axe de rotation (D2) supplémentaire suivant un troisième axe (Y), grâce à cette articulation à lames-ressorts (22) supplémentaire.

7. Tête de palpage multi-axes selon la revendication 6, caractérisée par le fait que les deux axes de rotation (D1, D2) se coupent en un point commun.

8. Tête de palpage multi-axes selon la revendication 7, caractérisée par le fait que le point d'intersection des deux axes de rotation (D1, D2) est situé sur l'axe (A) de la touche (3).

9. Tête de palpage multi-axes selon la revendication 1, caractérisée par le fait qu'un dispositif de mesure d'angles (12) est prévu pour mesurer la déviation de la touche (3) suivant au moins un axe (X) suivant lequel une articulation à ressorts croisés (7) est susceptible d'être déviée.
